# EUROPÄISCHE PATENTANMELDUNG

(11) **EP 2 174 747 A1**
(43) Veröffentlichungstag der Anmeldung: **14.04.2010**
(21) Anmeldenummer: 08105516.2
(22) Anmeldetag: 08.10.2008
(51) Int. Cl.: B23Q 3/00, B23Q 7/14, B23P 19/00

(54) **Verfahren zur Bearbeitung von Werkstücken in einer Arbeitsstation und Arbeitsstation hierfür**

(71) Anmelder: Pierburg Pump Technology GmbH, 41460 Neuss (DE)
(72) Erfinder: Ziebeil, Frank, Dr., 41366 Schwalmtal (DE)
(74) Vertreter: Patentanwälte ter Smitten

(57) **Zusammenfassung**

Verfahren zur Bearbeitung von Werkstücken (14) verschiedener Typen in einer Arbeitsstation (10), wobei die Arbeitsstation (10) einen Stationsrahmen (16), ein von dem Stationsrahmen (16) gehaltenes Werkzeug (12) zur Bearbeitung des Werkstückes (14), einen austauschbaren Werkstückhalter (20) in einer mit dem Stationsrahmen (16) verbundenen Halteraufnahme (18), eine Steuervorrichtung (22) zur Steuerung des das Werkstück (14) bearbeitenden Werkzeuges (12), aufweist, wobei der austauschbare Werkstückhalter (20) einen Informationsspeicher (24) mit Informationen über den zu bearbeitenden Werkstück-Typ aufweist, für den der Werkstückhalter (20) bestimmt ist, und wobei stationsseitig und halterseitig Kopplungselemente (40,42) vorgesehen sind, über die die Werkstück-Typ-Informationen aus dem Werkstückhalter- Informationsspeicher (24) zu der Steuervorrichtung (22) übertragen werden können, mit den Verfahrensschritten wenn erstens nach einem ersten Werkstück (14) ein zweites Werkstück (14) gleichen Typs bearbeitet werden soll, durch Entnehmen des ersten Werkstücks (14) aus dem Werkstückhalter (20) und Einsetzen des zweiten Werkstückes (14) in denselben Werkstückhalter (20), und wenn zweitens nach dem ersten Werkstück (14) ein zweites Werkstück anderen Typs bearbeitet werden soll, durch Entnehmen des Werkstückhalters (20) des ersten Typs, Einsetzen des Werkstückhalters (20') des zweiten Typs, oder durch Übertragen der Werkstück-Typ-Informationen aus dem Informationsspeicher (24') zu der Steuervorrichtung (22), und durch Einsetzen des Werkstücks (14') zweiten Typs in den Werkstückhalter (20') zweiten Typs.

## Beschreibung

Verfahren zur Bearbeitung von Werkstücken in einer Arbeitsstation und Arbeitsstation hierfür.

Die Erfindung bezieht sich auf ein Verfahren zur Bearbeitung von Werkstücken verschiedener Typen in einer Arbeitsstation sowie auf einer Arbeitsstation für ein derartiges Verfahren.

Die Montage von Werkstücken, beispielsweise von Motorblöcken oder Getrieben, erfolgt in der Automobilindustrie beispielsweise auf Montagestraßen mit mehreren modularen und mobilen Arbeitsstationen, wobei in jeder Arbeitsstation nur wenige Arbeitsschritte ausgeführt werden.

Aus DE 2006 019 013 A1 ist eine derartige Arbeitsstation als Teil einer Montagestraße bekannt. Das Werkstück wird auf einem Werkstückhalter fixiert der Arbeitsstation zugeführt, und bleibt auch während der Bearbeitung auf dem Werkstückhalter.

Aus US -A- 4 776 080 ist ein Werkstückhalter bekannt, der einen Informationsspeicher aufweist, in dem eine Identifizierung des von dem Werkstückhalter gehaltenen Werkstückes gespeichert werden kann. Der Werkstückhalter ist dazu geeignet, zusammen mit dem Werkstück von Arbeitsstation zu Arbeitsstation zu wandern. Jeder Arbeitsstation liest die Werkstück-Identifikation aus dem Werkstückhalter-Informationsspeicher aus, und kann hiermit die werkstückspezifischen Informationen für die Bearbeitung des Werkstückes aus einer zentralen Datenbank abfragen.

In der Fertigungsindustrie, beispielsweise bei den Automobil-Zulieferern, geht der Trend zu einer dezentralen Fertigung an vielen Fertigungs-Standorten, die idealerweise vor dem Werkstor des Abnehmers, also des Automobil-Herstellers, liegen. Hierdurch reduzieren sich die Stückzahlen an jedem Fertigungs-Standort erheblich, wobei dennoch das gesamte Produktspektrum an jedem Fertigungs-Standort verfügbar sein sollte.

Aufgabe der Erfindung ist es, ein Verfahren zur Bearbeitung von Werkstücken beziehungsweise einer Arbeitsstation hierfür zu schaffen, mit dem beziehungsweise der auf einfache Weise eine zuverlässige Standardisierung der Herstellung gleicher Werkstücke an verschiedenen Fertigungs-Standorten sichergestellt werden kann.

Diese Aufgabe wird erfindungsgemäß gelöst mit den Merkmalen des Patentanspruches 1 beziehungsweise 3.

Die Arbeitsstation gemäß dem erfindungsgemäßen Verfahren weist einen Stationsrahmen auf, der ein Werkzeug zur Bearbeitung des Werkstückes sowie alle weiteren Module und Elemente der Arbeitsstation hält. Ferner ist ein austauschbarer Werkstückhalter vorgesehen, der in einer mit dem Stationsrahmen verbundenen Halteraufnahme sitzt. Der Werkstückhalter weist einen Informationsspeicher auf, in dem Informationen über den zu bearbeitenden Werkstück-Typ gespeichert sind, für den der betreffende Werkstückhalter bestimmt ist. Zur Übertragung der Informationen über den Werkstück-Typ von dem Informationsspeicher zu einer Steuervorrichtung der Arbeitsstation sind werkstückhalterseitig und stationsseitig Kopplungselemente vorgesehen. Die Steuervorrichtung steuert das das Werkstück bearbeitende Werkzeug.

Das erfindungsgemäße Verfahren zur Bearbeitung von Werkstücken verschiedener Typen weist folgende Verfahrensschritte auf:
Wenn nach einem ersten Werkstück ein zweites Werkstück gleichen Typs bearbeitet werden soll:
   Entnehmen des ersten Werkstücks aus dem Werkstückhalter und
   Einsetzen des zweiten Werkstückes in denselben Werkstückhalter;
wenn nach dem ersten Werkstück ein zweites Werkstück anderen Typs bearbeitet werden soll:
   Entnehmen des Werkstückhalters des ersten Typs, Einsetzen des Werkstückhalters des zweiten Typs,
Übertragen der Werkstück-Typ-Informationen aus dem Informationsspeicher zu der Steuervorrichtung, und
Einsetzen des Werkstücks zweiten Typs in den Werkstückhalter zweiten Typs.

Die beiden letzten Verfahrensschritte können selbstverständlich auch in umgekehrter Reihenfolge vollzogen werden.

Gemäß der Erfindung sind also Werkstück-Typ-spezifische Werkstückhalter vorgesehen, die jeweils für die Dauer der Herstellung eines Werkstück-Typs in der betreffenden Arbeitsstation verbleiben. Die Werkstücke werden durch einen Roboter oder manuell in den in der Arbeitsstation verbleibenden Werkstückhalter eingesetzt beziehungsweise aus diesem nach der Bearbeitung wieder entnommen. Die Werkstückhalter können zentral hergestellt und ihre Informationsspeicher zentral programmiert werden. Auf diese Weise kann zentral sichergestellt werden, dass die betreffenden Werkstücke in Arbeitsstationen, die sich an verschiedenen Standorten befinden, auf die gleiche Weise in gleicher Qualität bearbeitet werden.

In dem Informationsspeicher des Werkstückhalters sind Informationen über den Typ des betreffenden Werkstückes abgelegt. Es können auch Informationen über die Bearbeitung des betreffenden Werkstückes beziehungsweise Steuerungsinformationen zur Steuerung des Werkzeugs in dem Informationsspeicher abgelegt sein. Alternativ kann in dem Informationsspeicher auch nur eine Identifikationsnummer für den Werkstückhalter abgespeichert sein. Die Informationen über den Werkstück-Typ und/oder über die Bearbeitung des einsetzbaren Werkstück-Typs bzw. Steuerungsinformationen können aus der Zentraleinheit bzw. einer Bibliothek der Arbeitsstation und/oder von einem Zentralcomputer gespeichert bzw. zu der Steuervorrichtung gesendet werden. Jeder Werkstückträger hat eine einmalige Identifikationsnummer.

Gemäß einer bevorzugten Ausgestaltung ist jedoch vorgesehen, dass die Steuerungsinformationen zur Steuerung des Werkzeugs in einer Bibliothek der Steuervorrichtung der Arbeitsstation abgelegt sind. In der Bibliothek sind Steuerungs- und Bearbeitungsinformationen für alle Werkstücke abgelegt, die in der Arbeitsstation bearbeitet werden können. Die Bearbeitungsinformationen für einen bestimmten Werkstück-Typ können alternativ oder ergänzend auch von einem Zentralcomputer abgerufen werden, sobald der Werkstückhalter in die Halteraufnahme der Arbeitsstation eingesetzt und der Werkstück-Typ aus dem Informationsspeicher des Werkstückhalters ausgelesen wurde.

Vorzugsweise sind die Kopplungselemente, durch die die Steuervorrichtung der Arbeitsstation und der Informationsspeicher des Werkstückhalters miteinander verbunden sind, als mechanische elektrische Stecker ausgebildet. Hierdurch wird eine dauerhafte, zuverlässige und störungsfreie Verbindung hergestellt.

Gemäß einer bevorzugten Ausgestaltung weist die Arbeitsstation zwei Zinkenöffnungen für die Zinken eines Gabestaplers auf. Die Arbeitsstation lässt sich einfach durch einen Gabelstapler ergreifen und platzieren. Hierdurch wird es mit einfachen Mitteln möglich, eine Montagelinie, die aus mehreren Arbeitsstationen besteht, zu verändern.

Im Folgenden wird ein Ausführungsbeispiel der Erfindung anhand der Figuren näher erläutert.

Es zeigen:
Figur 1 eine Seitenansicht einer Arbeitsstation, und
Figur 2 eine schematische Darstellung der Steuerung der Arbeitsstation der Figur 1.

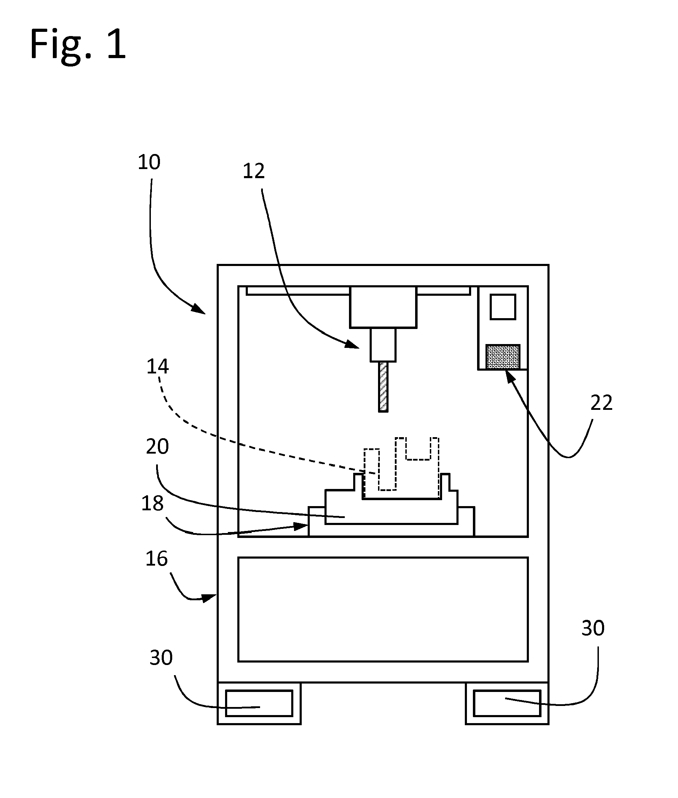

Die in der Figur 1 dargestellte Arbeitsstation 10 kann Bestandteil einer Montagelinie zur Herstellung eines komplexen Werkstückes 14 sein, beispielsweise eines Motorblockes, eines Pumpengehäuses u.ä.

Die Arbeitsstation 10 weist einen Stationsrahmen 16 auf, der an seiner Unterseite zwei seitliche Zinkenöffnungen 30 aufweist, in die Zinken eines Gabelstaplers eingesteckt werden können. Die Arbeitsstation 10 kann auf diese Weise durch einen Gabelstapler einfach und sicher versetzt werden.

Der Stationsrahmen 16 hält ein Werkzeug 12, das vorliegend von einem durch einen Elektromotor angetriebenen Bohrer gebildet wird. Ferner weist die Arbeitsstation 12 eine Steuervorrichtung 22 auf, die das Werkzeug 12 steuert.

Der Stationsrahmen 16 weist eine Halteraufnahme 18 auf, die einen austauschbaren Werkstückhalter 20 hält. Der Werkstückhalter 20 ist so ausgebildet, dass er jeweils ein Werkstück 14 eines bestimmten ersten Typs für die Zeit der Bearbeitung durch das Werkzeug 12 fixiert. Sobald die Bearbeitung des Werkstückes 14 durch das Werkzeug 12 abgeschlossen ist, wird das bearbeitete Werkstück 14 von dem Werkstückhalter 20 entfernt, und ein unbearbeitetes Werkstück 20 desselben Typs in dem Werkstückhalter 20 fixiert. Der Werkstückhalter 20 bleibt also so lange unverändert in der Halteraufnahme 18 befestigt, wie Werkstücke 14 desselben ersten Typs durch das Werkzeug 12 bearbeitet werden sollen. Sobald Werkstücke 14' eines zweiten Typs in der Arbeitsstation 10 bearbeitet werden sollen, wird der Werkstückhalter 20 ersten Typs durch einen Werkstückhalter 20' zweiten Typs ausgetauscht.

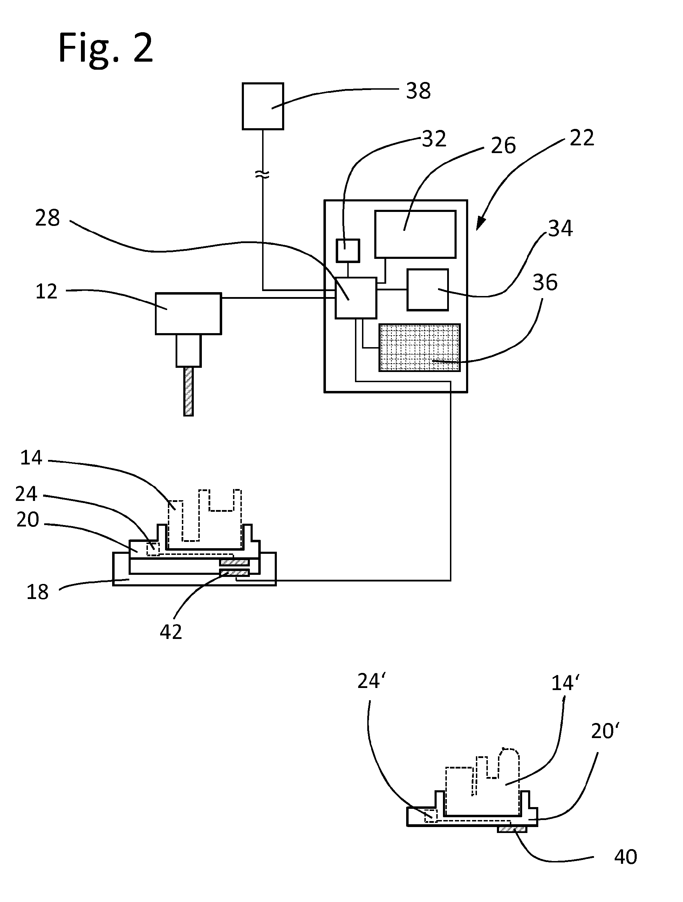

Wie in Figur 2 dargestellt ist, weist der Werkstückhalter 20 einen elektronischen Informationsspeicher 24 auf, der Informationen über den zu bearbeitenden Werkstück-Typ aufweist, für den der Werkstückhalter 20 bestimmt ist. Der Werkstückhalter 20 und die Halteraufnahme 18 weisen jeweils elektrische Kopplungselemente 40,42 auf, durch die der Informationsspeicher 24 des Werkstückhalters 20 mit der Steuervorrichtung 22 verbunden ist. Der Informationsspeicher 24 enthält im wesentlichen Identifikationendaten, mit denen der Werkstück-Typ exakt identifiziert werden kann. Die Kopplungselemente 40,42 sind vorliegend als elektrische Stecker ausgebildet, können jedoch beispielsweise auch drahtlos ausgeführt sein.

Die Steuereinheit 22 weist eine Zentraleinheit 28, einen Bearbeitungsspeicher 32 und eine Bibliothek 34 mit Bearbeitungsinformationen für alle Werkstück-Typen auf, die in der Arbeitsstation 10 bearbeitet werden können. Ferner weist die Steuereinheit 22 einen Monitor 26 und eine Tastatur 36 auf.

Beim Einschalten der Steuereinheit 21 oder beim Einsetzen eines neuen Werkstückhalters liest die Zentraleinheit 28 den Werkstück-Typ beziehungsweise seine Identifikationsdaten aus dem Informationsspeicher 24 des Werkstückhalters 20 aus. Anschließend lädt die Zentraleinheit 28 die zu diesem Werkstück-Typ in der Bibliothek 34 gespeicherten Bearbeitungsinformationen in den Bearbeitungsspeicher 32. Sobald ein neues unbearbeitetes Werkstück 14 in den Werkstückhalter eingesetzt ist, wird das Werkstück für 10 durch das Werkzeug 12 anhand der Bearbeitungsinformationen in dem Bearbeitungsspeicher 32 sukzessive bearbeitet.

Sobald alle Werkstücke 14 eines ersten Werkstück-Typs bearbeitet sind und Werkstücke 14' eines zweiten Werkstück-Typs in der Arbeitsstation 10 bearbeitet werden sollen, wird der Werkstückhalter 20 des ersten Typs entfernt und ein Werkstückhalter 20' eines zweiten Typs in die Halteraufnahme 18 eingesetzt. Sobald die Kopplungselemente 40,42 zusammengesteckt sind, liest die Zentraleinheit 28 den Werkstück-Typ aus dem Informationsspeicher 24' aus und lädt die korrespondierenden Bearbeitungsinformationen aus der Bibliothek 34 in den Bearbeitungsspeicher 32.

Die Zentraleinheit 28 der Steuervorrichtung 23 ist über ein Netzwerk, beispielsweise über eine Internet-Verbindung, mit einem Zentralcomputer 38 verbunden. In den Zentralcomputer 38 sind alle Bearbeitungsinformationen zu allen Werkstück-Typen und für alle verschiedenen Arbeitsstationen mit verschiedenen Werkzeugen abgespeichert. Eine Aktualisierung der Bearbeitungsinformationen in den Steuervorrichtungen 22 der Arbeitsstationen 10 erfolgt zu festgelegten Zeitpunkten und/oder auf Anforderung. Durch die zentrale Bereitstellung aller Bearbeitungsinformationen in einem einzigen Zentralcomputer 38 wird sichergestellt, dass an einer Vielzahl verschiedener Standorte beziehungsweise Montagelinien die Bearbeitungsinformationen für dieselben Werkstück-Typen stets identisch sind. Auf diese Weise wird sichergestellt, dass die Werkstücke an allen Standorten und in allen Arbeitsstationen in gleicher Weise und mit gleicher Qualität bearbeitet werden.

## Patentansprüche

1. Verfahren zur Bearbeitung von Werkstücken (14) verschiedener Typen in einer Arbeitsstation (10),
wobei die Arbeitsstation (10) aufweist:
- einen Stationsrahmen (16),
- ein von dem Stationsrahmen (16) gehaltenes Werkzeug (12) zur Bearbeitung des Werkstückes (14),
- einen austauschbaren Werkstückhalter (20) in einer mit dem Stationsrahmen (16) verbundenen Halteraufnahme (18),
- eine Steuervorrichtung (22) zur Steuerung des das Werkstück (14) bearbeitenden Werkzeuges (12),
wobei der austauschbare Werkstückhalter (20) einen Informationsspeicher (24) mit Informationen über den zu bearbeitenden Werkstück-Typ aufweist, für den der Werkstückhalter (20) bestimmt ist, und
wobei stationsseitig und halterseitig Kopplungselemente (40,42) vorgesehen sind, über die die Werkstück-Typ-Informationen aus dem Werkstückhalter-Informationsspeicher (24) zu der Steuervorrichtung (22) übertragen werden können,
mit den Verfahrensschritten:
- wenn nach einem ersten Werkstück (14) ein zweites Werkstück (14) gleichen Typs bearbeitet werden soll:
• Entnehmen des ersten Werkstücks (14) aus dem Werkstückhalter (20) und Einsetzen des zweiten Werkstückes (14) in denselben Werkstückhalter (20);
- wenn nach dem ersten Werkstück (14) ein zweites Werkstück anderen Typs bearbeitet werden soll:
• Entnehmen des Werkstückhalters (20) des ersten Typs, Einsetzen des Werkstückhalters (20') des zweiten Typs,
• Übertragen der Werkstück-Typ-Informationen aus dem Informationsspeicher (24') zu der Steuervorrichtung (22), und
• Einsetzen des Werkstücks (14') zweiten Typs in den Werkstückhalter (20') zweiten Typs.

2. Verfahren nach Anspruch 1, wobei die Arbeitsstation (10) Merkmale der Arbeitsstation (10) einer der Ansprüche 4 bis 6 aufweist.

3. Arbeitsstation (10) zur Bearbeitung eines Werkstückes (14) gemäß dem Verfahren nach Anspruch 1, mit
- einem Stationsrahmen (16),
- einem von dem Stationsrahmen (16) gehaltenen Werkzeug (12) zur Bearbeitung des Werkstückes (14),
- einem austauschbaren Werkstückhalter (20) in einer mit dem Stationsrahmen (16) verbundenen Halteraufnahme (18),
- einer Steuervorrichtung (22) zur Steuerung des das Werkstück (14) bearbeitenden Werkzeuges (12),
wobei der austauschbare Werkstückhalter (20) einen Informationsspeicher (24) mit Informationen über den zu bearbeitenden Werkstück-Typ aufweist, für den der Werkstückhalter (20) bestimmt ist, und
wobei stationsseitig und halterseitig Kopplungselemente (40,42) vorgesehen sind, über die die Werkstück-Typ-Informationen aus dem Werkstückhalter-Informationsspeicher (24) zu der Steuervorrichtung (22) übertragen werden können.

4. Arbeitsstation (10) nach Anspruch 3, wobei die Kopplungselemente (40,42) als elektrische Stecker ausgebildet sind.

5. Arbeitsstation (10) nach Anspruch 3 oder 4, wobei der Steuervorrichtung (22) eine Bibliothek (32) zugeordnet ist, in der zu mindestens zwei verschiedenen Werkstück-Typen Steuerungsinformationen zur Steuerung des Werkzeugs (12) gespeichert sind, wobei die in dem Informationsspeicher (24) gespeicherte Information im Wesentlichen den Werkstück-Typ identifiziert.

6. Arbeitsstation (10) nach einem der Ansprüche 3 bis 5, wobei die Arbeitsstation Räder zum Verfahren der Arbeitsstation aufweist.

7. Arbeitsstation (10) nach einem der Ansprüche 3 bis 5, wobei die Arbeitsstation (10) Zinkenöffnungen (30) für die Zinken eines Gabelstaplers aufweist.
